(19) **European Patent Office**

(11) **EP 3 495 524 A1**

(12) **EUROPEAN PATENT APPLICATION**
published in accordance with Art. 153(4) EPC

(43) Date of publication:
**12.06.2019 Bulletin 2019/24**

(21) Application number: **17837012.8**

(22) Date of filing: **02.08.2017**

(51) Int Cl.:
*C22C 38/00* [(2006.01)]    *B23K 9/007* [(2006.01)]
*B23K 9/23* [(2006.01)]    *B23K 35/30* [(2006.01)]
*C22C 38/58* [(2006.01)]

(86) International application number:
**PCT/JP2017/028023**

(87) International publication number:
**WO 2018/025910 (08.02.2018 Gazette 2018/06)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **04.08.2016 JP 2016154053**

(71) Applicant: **Kabushiki Kaisha Kobe Seiko Sho
(Kobe Steel, Ltd.)
Kobe-shi, Hyogo 651-8585 (JP)**

(72) Inventors:
• **YASHIMA Takashi**
  **Kanagawa 251-8551 (JP)**
• **SUZUKI Reiichi**
  **Kanagawa 251-8551 (JP)**
• **MIYATA Minoru**
  **Kanagawa 251-8551 (JP)**

(74) Representative: **Müller-Boré & Partner
Patentanwälte PartG mbB
Friedenheimer Brücke 21
80639 München (DE)**

(54) **ARC SPOT WELDING METHOD**

(57) The present invention pertains to: a method for arc spot welding a steel plate having a carbon equivalent CeqBM of 0.35 or more (the carbon equivalent CeqBM is defined in the specification), the method being characterized in that a welding wire containing 98.5 mass% or more of Fe is used, and the ratio between the carbon equivalent CeqWM of a weld metal formed by the method (the carbon equivalent CeqWM of the weld metal is defined in the specification) and the carbon equivalent CeqBM of the steel plate, CeqWM/CeqBM is 0.2-1.0. According to the arc spot welding method, brittle fracture can be prevented and high joint strength can be obtained even when the C content in the steel plate is high.

EP 3 495 524 A1

**Description**

Technical Field

The present invention relates to an arc spot welding method.

Background Art

In the field of automobiles, car bodies are increasingly becoming light-weight as the fuel efficiency is pursued and regulations on exhaust gas are imposed. Under such trends, high-strength steel sheets having a tensile strength exceeding 780 MPa are increasingly employed as the steel sheets used in automobile parts, and it is expected that the trends toward higher strength will continue in the future. Moreover, structural parts, such as car body parts, formed to have complicated shapes are required to have high press formability as well as high strength.

Thus, there is a tendency to use steel sheets with an increased C content in order to meet both of these properties. Meanwhile, resistance spot welding is mostly employed in car body assembly and joining of parts. Although addition of C to the steel sheets is effective for increasing the strength of the steel sheets and improving the press formability, welding heat during the course of resistance spot welding generates martensite in the heat affected zone (HAZ), resulting in excessive hardening and embrittlement. Thus, there has been a problem of significantly degraded weldability, such as degraded strength and generation of cracks.

Meanwhile, arc spot welding is known as an alternative welding technique for the resistance spot welding. For example, PTL 1 describes an arc spot welded joint obtained by performing arc spot welding on high-tensile steel sheets superimposed on each other, and that the strength of the weld metal can be obtained and an arc spot welded joint having a high cross tensile strength and excellent joint strength is obtained by controlling the relationship between the base metal hardness of a high-tensile steel sheet and the weld metal hardness to be in an appropriate range.

There is also known arc spot welding that uses a wire having an Fe content of less than 98.5 mass%, which corresponds to a general-purpose wire YGW11, YGW15, YGW18, or YGW19; however, with a steel sheet having a higher C content, this spot arc spot welding has had problems in that brittle fracture occurs in the HAZ and sufficient CTS is not obtained.

Citation List

Patent Literature

PTL 1: Japanese Unexamined Patent Application Publication No. 2013-10139

Summary of Invention

Technical Problem

PTL 1 describes that the joint strength can be increased by equalizing the hardness of the weld metal and the hardness of the steel sheet. However, PTL 1 does not take into account the embrittlement of the HAZ. Moreover, general-purpose welding wires such as YGW11, YGW15, YGW18, and YGW19 are used as the welding wire. In such a case, when a steel sheet having a high C content is used as the base metal, embrittlement of the HAZ becomes notable, and brittle fracture is considered to occur without gaining sufficient joint strength.

Thus, an object of the present invention is to provide an arc spot welding method with which brittle fracture is prevented and high joint strength can be obtained even when a steel sheet having a high C content is used.

Solution to Problem

The inventors of the present invention have conducted extensive investigations, found that the object can be achieved by using a welding wire containing a particular amount or more of Fe and adjusting the ratio of the carbon equivalent of the weld metal formed to the carbon equivalent of the steel sheet serving as the base metal to be within a particular range, and thus accomplished the present invention.

In other words, the present invention relates to an arc spot welding method that uses a steel sheet having a carbon equivalent $Ceq_{BM}$, which is expressed by formula (1) below, of 0.35 or more, the arc spot welding method including using a welding wire containing 98.5 mass% or more of Fe,
wherein $Ceq_{WM}/Ceq_{BM}$, which is a ratio of a carbon equivalent $Ceq_{WM}$, which is expressed by formula (2) below, of a weld metal formed to the carbon equivalent $Ceq_{BM}$ of the steel sheet, is 0.2 to 1.0:

$$Ceq_{BM} = [C]_{BM} + [Mn]_{BM}/6 + ([Cu]_{BM} + [Ni]_{BM})/15 + ([Cr]_{BM} + [Mo]_{BM} + [V]_{BM})/5 \quad (1)$$

(where $[C]_{BM}$, $[Mn]_{BM}$, $[Cu]_{BM}$, $[Ni]_{BM}$, $[Cr]_{BM}$, $[Mo]_{BM}$, and $[V]_{BM}$ respectively represent C, Mn, Cu, Ni, Cr, Mo, and V contents (mass%) in the steel sheet)

$$Ceq_{WM} = [C]_{WM} + [Mn]_{WM}/6 + ([Cu]_{WM} + [Ni]_{WM})/15 + ([Cr]_{WM} + [Mo]_{WM} + [V]_{WM})/5$$

$$(2)$$

(where $[C]_{WM}$, $[Mn]_{WM}$, $[Cu]_{WM}$, $[Ni]_{WM}$, $[Cr]_{WM}$, $[Mo]_{WM}$, and $[V]_{WM}$ respectively represent C, Mn, Cu, Ni, Cr, Mo, and V contents (mass%) in the weld metal).

In the arc spot welding method described above, a carbon equivalent $Ceq_W$, which is expressed by formula (3) below, of the welding wire may be 0.3 or less:

$$Ceq_W = [C]_W + [Mn]_W/6 + ([Cu]_W + [Ni]_W)/15 + ([Cr]_W + [Mo]_W)/5 \quad (3)$$

(where $[C]_W$, $[Mn]_W$, $[Cu]_W$, $[Ni]_W$, $[Cr]_W$, and $[Mo]_W$ respectively represent C, Mn, Cu, Ni, Cr, and Mo contents (mass%) in the welding wire).

In the arc spot welding method described above, a heat input may be 5.5 kJ or less.

In the arc spot welding method described above, when arc spot welding is performed on a first steel sheet on an arc exposed side and a second steel sheet that are superimposed on top of each other with a rear surface of the first steel sheet facing a front surface of the second steel sheet, and when a bead diameter of the weld metal on a front surface of the first steel sheet is assumed to be r1 and a bead diameter of the weld metal on the front surface of the second steel sheet is assumed to be r2, r1 and r2 may satisfy formula (4) below, and when, in a section of the weld metal taken in a direction parallel to a thickness of the steel sheets so as to pass a center of the weld metal, a region corresponding to the weld metal projecting from the front surface of the first steel sheet is assumed to be a first region, a region corresponding to the weld metal projecting from a rear surface of the second steel sheet is assumed to be a second region, and a region other than the first region and the second region is assumed to be a third region, X expressed by formula (6) below may be 0.2 to 0.8:

$$0.2 \leq (r2/r1) \leq 1.0 \quad (4)$$

$$X = (\text{area of first region} + \text{area of second region})/(\text{area of first region} + \text{area of}$$

$$\text{second region} + \text{area of third region}) \quad (6)$$

In the arc spot welding method described above, a ratio of a Vickers hardness of the weld metal to a Vickers hardness of the steel sheet (Vickers hardness of weld metal/ Vickers hardness of steel sheet) may be 0.3 to 1.2.

Advantageous Effects of Invention

According to the arc spot welding method of the present invention, brittle fracture is prevented and high joint strength can be obtained even when a steel sheet having a high C content is used.

Brief Description of Drawings

[Fig. 1] Fig. 1 is a schematic cross-sectional view illustrating a direction in which fracture propagates in a welded structure obtained by an arc spot welding method according to one embodiment of the present invention.
[Fig. 2] Fig. 2 is a schematic cross-sectional view illustrating a direction in which fracture propagates in a welded structure obtained by an arc spot welding method according to one embodiment of the present invention.
[Fig. 3] Fig. 3 is a schematic cross-sectional view of a welded structure obtained by an arc spot welding method according to one embodiment of the present invention.

[Fig. 4] Fig. 4 is a schematic diagram illustrating how cross tension testing is carried out.

Description of Embodiments

The embodiments of the present invention will now be described in detail. It should be understood that the present invention is not limited by the embodiments described above. Moreover, in this description, the percentage (mass%) based on mass has the same meaning as the percentage (wt%) based on weight.

An arc spot welding method of this embodiment (hereinafter, may be referred to as the present arc spot welding method) is an arc spot welding method that uses a steel sheet having a carbon equivalent $Ceq_{BM}$, which is expressed by formula (1) below, of 0.35 or more, the method including using a welding wire containing 98.5 mass% or more of Fe, wherein $Ceq_{WM}/Ceq_{BM}$, which is a ratio of a carbon equivalent $Ceq_{WM}$ of a weld metal formed expressed by formula (2) below to a carbon equivalent $Ceq_{BM}$ of the steel sheet, is 0.2 to 1.0.

$$Ceq_{BM} = [C]_{BM} + [Mn]_{BM}/6 + ([Cu]_{BM} + [Ni]_{BM})/15 + ([Cr]_{BM} + [Mo]_{BM} + [V]_{BM})/5 \quad (1)$$

(where $[C]_{BM}$, $[Mn]_{BM}$, $[Cu]_{BM}$, $[Ni]_{BM}$, $[Cr]_{BM}$, $[Mo]_{BM}$, and $[V]_{BM}$ respectively represent C, Mn, Cu, Ni, Cr, Mo, and V contents (mass%) in the steel sheet).

$$Ceq_{WM} = [C]_{WM} + [Mn]_{WM}/6 + ([Cu]_{WM} + [Ni]_{WM})/15 + ([Cr]_{WM} + [Mo]_{WM} + [V]_{WM})/5$$

$$(2)$$

(where $[C]_{WM}$, $(Mn]_{WM}$, $[Cu]_{WM}$, $[Ni]_{WM}$, $[Cr]_{WM}$, $[Mo]_{WM}$, and $[V]_{WM}$ respectively represent C, Mn, Cu, Ni, Cr, Mo, and V contents (mass%) in the weld metal).

The carbon equivalent $Ceq_{BM}$ of the base metal significantly affects embrittlement of the welding junction, which is the interface between the weld metal and the base metal. Here, when the carbon equivalent $Ceq_{BM}$ of the steel sheet is 0.35 or more, martensite is generated near the welding junction. Since martensite is extremely hard with Hv of 700 or more, and is brittle, martensite is a cause of brittle fracture when a load is applied. The present arc spot welding method aims to prevent brittle fracture and obtain high joint strength even in such cases, and is thus targeted to the cases in which a steel sheet (hereinafter may be referred to as a high-C steel sheet) having a carbon equivalent $Ceq_{BM}$ of 0.35 or more is used as the base metal.

In order to achieve the object described above, in the present arc spot welding method, a welding wire containing 98.5 mass% or more of Fe is used. The weld metal formed can be softened by using the welding wire containing 98.5 mass% or more of Fe. In such a case, since the weld metal selectively deforms when stress is applied, it becomes possible to suppress brittle fracture at the welding junction. The Fe content in the welding wire is preferably 99 mass% or more.

Note that the chemical components other than Fe contained in the welding wire are not particularly limited, and examples thereof include optional components such as C, Si, Mn, Cu, Ni, Cr, Mo, B, and Ti, and unavoidable impurities such as S and P.

In the present arc spot welding method, $Ceq_{WM}/Ceq_{BM}$, which is the ratio of the carbon equivalent $Ceq_{WM}$ of the weld metal to the carbon equivalent $Ceq_{BM}$ of the steel sheet, is set to be 0.2 to 1.0. At $Ceq_{WM}/Ceq_{BM}$ less than 0.2, CTS may be degraded due to hot cracking. Thus, $Ceq_{WM}/Ceq_{BM}$ is 0.2 or more and preferably 0.5 or more. When $Ceq_{WM}/Ceq_{BM}$ exceeds 1.0, the weld metal may become brittle. Thus, $Ceq_{WM}/Ceq_{BM}$ is 1.0 or less and preferably 0.7 or less.

In the present arc spot welding method, the carbon equivalent $Ceq_W$ of the welding wire expressed by formula (3) below is preferably 0.3 or less.

$$Ceq_W = [C]_W + [Mn]_W/6 + ([Cu]_W + [Ni]_W)/15 + ([Cr]_W + [Mo]_W)/5 \quad (3)$$

(where $[C]_W$, $[Mn]_W$, $[Cu]_W$, $[Ni]_W$, $[Cr]_W$, and $[Mo]_W$ respectively represent C, Mn, Cu, Ni, Cr, and Mo contents (mass%) in the welding wire).

The reason for this is as follows.

That is, the carbon equivalent $Ceq_W$ of the welding wire affects embrittlement as significantly as the carbon equivalent $Ceq_{BM}$ of the steel sheet. When $Ceq_W$ exceeds 0.3, martensite occurs in the weld metal, the weld metal becomes brittle, and thus it becomes difficult to obtain sufficient joint strength. Thus, $Ceq_W$ is preferably 0.3 or less and more preferably 0.2 or less.

In the present arc spot welding method, the welding conditions such as heat input and shield gas are not particularly limited, and may be appropriately adjusted within the range that does not obstruct the effects of the present invention.

Although the heat input is not particularly limited, increasing the heat input increases the amount of martensite generated in the welding junction between the base metal and the weld metal and in the HAZ, and accelerates embrittlement; thus, in the present arc spot welding method, the heat input is preferably 5.5 kJ or less and more preferably 2.5 kJ or less. Although the lower limit of the heat input is not particularly limited, from the viewpoint of obtaining a heat input required to melt the lower sheet, the heat input is preferably 1.3 kJ or more, for example.

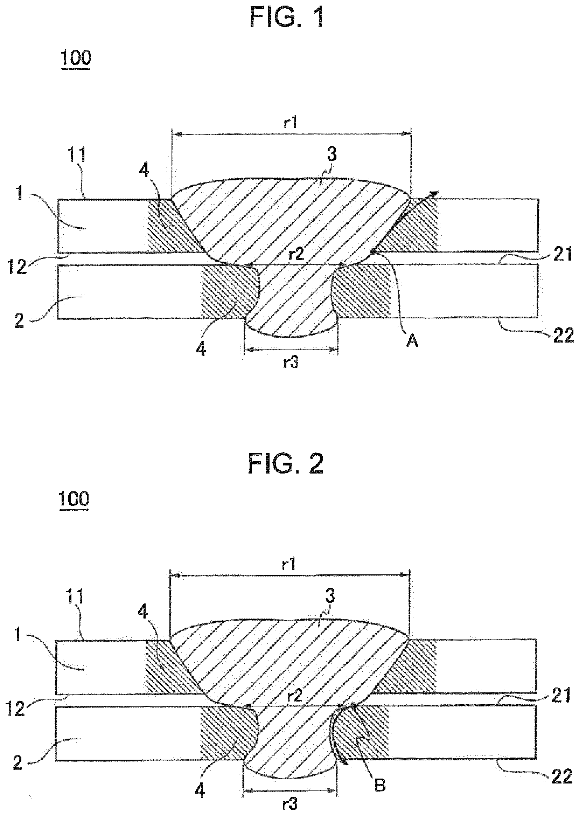

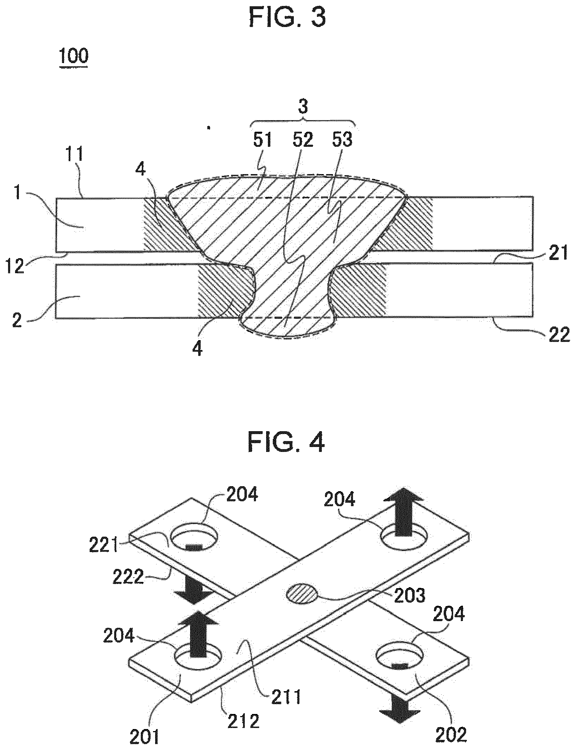

Referring to Figs. 1 and 2, in the present arc spot welding method, when arc spot welding is performed on a first steel sheet 1 on an arc exposed side and a second steel sheet 2 that are superimposed on top of each other with a rear surface 12 of the first steel sheet facing a front surface 21 of the second steel sheet 2, r1 and r2 preferably satisfy formula (4) below where r1 represents a bead diameter of the weld metal 3 on a front surface 11 of the first steel sheet 1 and r2 represents a bead diameter of the weld metal 3 on the front surface 21 of the second steel sheet 2; furthermore, referring to Fig. 3, X expressed by formula (6) below is preferably 0.2 to 0.8 where, in a section of the weld metal 3 taken in a direction parallel to a thickness of the steel sheets (first steel sheet 1 and second steel sheet 2) so as to pass a center of the weld metal 3, a first region 51 is a region corresponding to the weld metal 3 projecting from the front surface 11 of the first steel sheet 1, a second region 52 is a region corresponding to the weld metal 3 projecting from a rear surface 22 of the second steel sheet 2, and a third region 53 is a region other than the first region 51 and the second region 52. The reason why this embodiment is preferred is described below.

$$0.2 \le (r2/r1) \le 1.0 \quad (4)$$

$$X = (\text{area of first region} + \text{area of second region})/(\text{area of first region} + \text{area of second region} + \text{area of third region}) \quad (6)$$

Moreover, when the bead diameter of the weld metal 3 on the rear surface 22 of the second steel sheet 2 is assumed to be r3 and formula (5) below is satisfied, a more appropriate joint strength can be obtained, and this is more preferable.

$$0.5 \le (r2/r3) \le 10.0 \quad (5)$$

The shape of the weld metal 3 is a factor that determines where the stress concentrates when a tensile load is applied, and is an important factor that contributes to the position of fracture. Here, r2/r1 in formula (4) and r2/r3 in formula (5) serve as parameters for the fractured part and the fracture propagation direction.

$$< 0.2 \le (r2/r1) \le 1.0 \quad (4) >$$

In this embodiment, when r2/r1 is less than 0.2 or exceeds 1.0, such a shape is formed that stress concentrates in the welding junction (weld metal 3-HAZ 4) on the first steel sheet 1 side indicated by point A in Fig. 1; thus, when tensile stress is applied, the point A serves as a starting point of the fracture, and fracture occurs in the welding junction (weld metal 3-HAZ 4) on the first steel sheet 1 side. In this case, the direction of the arrow in Fig. 1 is the fracture propagation direction. In order to alleviate such stress concentration, r2/r1 is preferably within the range of 0.3 to 0.8 and more preferably within the range of 0.4 to 0.6.

$$< 0.5 \le (r2/r3) \le 10.0 \quad (5) >$$

In this embodiment, when r2/r3 is less than 0.5 or exceeds 10.0, such a shape is formed that stress concentrates in the welding junction (weld metal 3-HAZ 4) on the second steel sheet 2 side indicated by point B in Fig. 2; thus, when tensile stress is applied, the point B serves as a starting point of the fracture, and fracture occurs in the welding junction (weld metal 3-HAZ 4) on the second steel sheet 2 side. In this case, the direction of the arrow in Fig. 2 is the fracture propagation direction. In order to alleviate such stress concentration, r2/r3 is preferably within the range of 0.5 to 10.0, more preferably within the range of 1.0 to 8.0, and yet more preferably within the range of 1.0 to 5.0.

$$< 0.2 \leq X \leq 0.8 >$$

As described above, referring to Fig. 3, X is expressed by formula (6) below where, in a section of the weld metal 3 taken in a direction parallel to a thickness of the steel sheets (first steel sheet 1 and second steel sheet 2) so as to pass a center of the weld metal 3, a first region 51 is a region corresponding to the weld metal 3 projecting from the front surface 11 of the first steel sheet 1, a second region 52 is a region corresponding to the weld metal 3 projecting from the rear surface 22 of the second steel sheet 2, and a third region 53 is a region other than the first region 51 and the second region 52. The total of the area of the first region 51, the area of the second region 52, and the area of the third region 53 corresponds to the area of a cross-section of the weld metal 3 taken in a direction parallel to the thickness of the steel sheets (first steel sheet 1 and second steel sheet 2) so as to pass the center of the weld metal 3.

$$X = (\text{area of first region } 51 + \text{area of second region } 52)/(\text{area of first region } 51 +$$
$$\text{area of second region } 52 + \text{area of third region } 53)$$

Here, X serves as a parameter for the penetration ratio, which is a factor that contributes to the carbon equivalent and the shape of the weld metal. When X is less than 0.2, the shape of the weld metal does not fall within the ranges defined by formulae (4) and (5) above, and stress concentration occurs at the overlap portion between the upper sheet (first steel sheet) and the lower sheet (second steel sheet). Thus, X is preferably 0.2 or more and more preferably 0.4 or more.

Meanwhile, when X exceeds 0.8, the dilution ratio of the base metal increases, and the components in the steel sheet penetrate into the weld metal; thus, the carbon equivalent $Ceq_{WM}$ in the weld metal increases, and embrittlement is accelerated. Moreover, $Ceq_{WM}/Ceq_{BM}$ defined as above may become outside the range of 0.2 to 1.0. Thus, X is preferably 0.8 or less, more preferably 0.7 or less, and yet more preferably 0.6 or less.

In the present arc spot welding method, the ratio of the Vickers hardness of the weld metal to the Vickers hardness of the steel sheet (Vickers hardness of weld metal/Vickers hardness of steel sheet) (hereinafter may be referred to as the hardness ratio) is preferably 0.3 to 1.2.

When the hardness ratio is less than 0.3 and stress is applied, the weld metal selectively undergoes plastic deformation, but the base metal rarely undergoes plastic deformation. Thus, in order for both the base metal and the weld metal to undergo plastic deformation, the hardness ratio is preferably 0.3 or more and more preferably 0.5 or more.

Meanwhile, when the hardness ratio exceeds 1.2, the weld metal is harder than the base metal, and thus the weld metal does not readily undergo plastic deformation. When the weld metal does not plastically deform, the stress concentrates on the welding junction, which is the interface between the weld metal and the base metal. The welding junction is the interface between the base metal structure and the weld metal, and is also a heat affected zone (HAZ) region; thus, the welding junction is brittle. When the hardness ratio exceeds 1.2, fracture occurs from the brittle welding junction as the starting point, and thus high strength is rarely obtained. Thus, the hardness ratio is preferably 1.2 or less, more preferably 1.0 or less, yet more preferably 0.9 or less, and still more preferably 0.8 or less.

The present arc spot welding method may be MAG welding, MIG welding, TIG welding, or any other welding.

The shield gas may be appropriately selected from known gases, such as an inert gas such as Ar and He, $CO_2$, a mixture gas of an inert gas and $CO_2$ and/or $O_2$, and carbon dioxide gas (100% $CO_2$) according to the type of welding, such as MAG welding, MIG welding, and TIG welding; however, from the viewpoint of the weldability, a gas at least containing an inert gas, such as Ar or He, is preferably used.

As described in detail above, according to the arc spot welding method of this embodiment, brittle fracture is prevented and high joint strength can be obtained even when a steel sheet having a high C content is used.

EXAMPLES

The present invention will now be specifically described through examples below; however, the present invention is not limited by these examples and can be modified within the range that conforms to the gist of the present invention, and implemented. All of such modifications are included in the technical scope of the present invention.

First, the composition, the carbon equivalent $Ceq_{BM}$ expressed by formula (1) below, and the Vickers hardness Hv of the steel sheet used are described in Table 1. The Vickers hardness of the steel sheet (BM HV) was measured in accordance with JIS Z 2244.

$$Ceq_{BM} = [C]_{BM} + [Mn]_{BM}/6 + ([Cu]_{BM} + [Ni]_{BM})/15 + ([Cr]_{BM} + [Mo]_{BM} + [V]_{BM})/5 \quad (1)$$

(where $[C]_{BM}$, $[Mn]_{BM}$, $[Cu]_{BM}$, $[Ni]_{BM}$, $[Cr]_{BM}$, $[Mo]_{BM}$, and $[V]_{BM}$ respectively represent C, Mn, Cu, Ni, Cr, Mo, and V contents (mass%) in the steel sheet).

[Table 1]

Table 1

| Steel type | C | Si | Mn | Cu | Ni | Cr | Mo | V | CeqBM | Hv |
|---|---|---|---|---|---|---|---|---|---|---|
| A | 0.35 | 0.28 | 0.75 | 0.05 | 0.06 | 0.02 | 0.02 | 0.003 | 0.49 | 180.00 |
| B | 0.35 | 1.55 | 2.24 | 0.08 | 0.03 | 0.06 | 0.01 | 0.003 | 0.75 | 220.00 |
| C | 0.65 | 0.22 | 0.75 | 0.05 | 0.04 | 0.01 | 0.03 | 0.005 | 0.79 | 250.00 |
| D | 0.65 | 1.68 | 2.01 | 0.05 | 0.04 | 0.01 | 0.03 | 0.005 | 1.00 | 350.00 |
| E | 0.08 | 0.28 | 0.75 | 0.05 | 0.06 | 0.02 | 0.02 | 0.003 | 0.22 | 208.00 |
| F | 1.05 | 0.28 | 0.75 | 0.05 | 0.06 | 0.02 | 0.02 | 0.003 | 1.19 | 450.00 |

The amounts of components in Table 1 are in mass%.

(Samples 1 to 39)

For each example, two steel sheets, which were composed of the steel type and had a thickness shown in Table 2 and which had holes formed therein (holes 204), are arc-spot-welded under the welding conditions shown in Table 2 so as to form a test piece having a shape illustrated in Fig. 4. The upper sheet was assumed to be a first steel sheet 201, and the lower sheet was assumed to be a second steel sheet 202, and an arc (not illustrated) was applied from a front surface 211 of the first steel sheet 201. For the test pieces prepared, the first steel sheet 201 and the second steel sheet 202 were pulled in the directions of the arrows in Fig. 4 so as to perform CTS (cross tensile testing). The test pieces that exhibited a fracture load of 7 kN or more were rated ⊙, the test pieces that exhibited a fracture load of 5 kN or more and less than 7 kN were rated ○, and the test pieces that exhibited a fracture load of 5 kN or less were rated ×. Here, the ratings ⊙ and ○ are acceptable. The evaluation results are indicated in Table 3. However, in sample 39, arc spot welding was not performed but laser spot welding was performed under the following conditions and the same evaluation was conducted.

The welding conditions were a welding current of 200 to 300 A and an arc voltage of 15 to 25 V, and welding was performed at a heat input (kJ) described in Table 2. The heat input is calculated from heat input (kJ) = welding current (A) × arc voltage (v)/1000. In addition, the type of shield gas and the process are also indicated in Table 2. Note that, in the "Process" column, "Pulse", "Short-circuiting", "Wire feed control", "Laser filler", and "TIG" are defined as follows.

Pulse: Welding was performed under the conditions of base current: 400 A, peak current: 40 A, and peak time: 3.5 msec.

Short-circuiting: Welding was performed by using a DC power supply under conditions of welding current: 230 A and arc voltage: 22 V while repeating a short-circuiting state in which the wire contacts the base metal, and an arc state.

Wire feed control: Welding was performed under the conditions of welding current: 220 A and arc voltage: 22.6 V while conducting wire forward wire feeding and backward feeding according to the welding condition so that backward feeding was conducted when the welding state entered the short-circuiting state and forward feeding was conducted when the welding state entered the arc state.

Laser filler: A YAG laser was used to focus a 4-7 kW laser beam to a diameter of 0.6 to 0.9 mm at a focus distance of 280 mm, and welding was performed at 2 to 6 m/min. The type of the laser serving as the heat source is not particularly limited, and, for example, a carbon dioxide gas laser, a solid-state laser, or the like, may be used.

TIG: TIG welding was performed under the conditions of welding current: 150 A, arc length: 3 mm, filler feed speed: 2 m/min.

The amounts of the wire components in terms of mass% are indicated in Table 2. Moreover, "0" for the wire components in Table 2 indicates that the amount of that component is not more than the amount at which that component is considered to be an unavoidable impurity.

Furthermore, the carbon equivalent $Ceq_W$ of the wire used in each sample was calculated by using formula (3) below, and is indicated in Table 2.

$$Ceq_W = [C]_W + [Mn]_W/6 + ([Cu]_W + [Ni]_W)/15 + ([Cr]_W + [Mo]_W)/5 \quad (3)$$

(where $[C]_W$, $[Mn]_W$, $[Cu]_W$, $[Ni]_W$, $[Cr]_W$, and $[Mo]_W$ respectively represent C, Mn, Cu, Ni, Cr, and Mo contents (mass%) in the welding wire).

The carbon equivalent $Ceq_{BM}$ of the steel sheet is indicated in Table 2, as in Table 1. From the chemical component composition (balance being Fe and unavoidable impurities) of the obtained weld metal shown in Table 2, the carbon $Ceq_{WM}$ of the weld metal expressed by formula (2) below was calculated and indicated in Table 2. Furthermore, $Ceq_{WM}/Ceq_{BM}$, which is the ratio of $Ceq_{WM}$ to $Ceq_{BM}$ was calculated and indicated in Table 2.

$$Ceq_{WM} = [C]_{WM} + [Mn]_{WM}/6 + ([Cu]_{WM} + [Ni]_{WM})/15 + ([Cr]_{WM} + [Mo]_{WM} + [V]_{WM})/5$$

$$(2)$$

(where $[C]_{WM}$, $[Mn]_{WM}$, $[Cu]_{WM}$, $[Ni]_{WM}$, $[Cr]_{WM}$, $[Mo]_{WM}$, and $[V]_{WM}$ respectively represent C, Mn, Cu, Ni, Cr, Mo, and V contents (mass%) in the weld metal).

When arc spot welding was performed on the first steel sheet 201 on the arc exposed side and the second steel sheet 202 that were superimposed on top of each other with the rear surface 212 of the first steel sheet 201 facing a front surface 221 of the second steel sheet 202, a bead diameter of the weld metal 203 on the front surface 211 of the first steel sheet 201 was assumed to be r1 (mm), a bead diameter of the weld metal 203 on the front surface 221 of the second steel sheet 202 was assumed to be r2 (mm), a bead diameter of the weld metal 203 on a rear surface 222 of the second steel sheet 202 was assumed to be r3 (mm), and r1, r2, and r3 are indicated in Table 3. Moreover, r1/r2 and r3/r2 were calculated and indicated in Table 3.

In a section of the weld metal 203 taken in a direction parallel to the thickness of the steel sheets (first steel sheet 201 and second steel sheet 202) so as to pass a center of the weld metal 203, a region corresponding to the weld metal 203 projecting from the front surface 211 of the first steel sheet 201 was assumed to be a first region, a region corresponding to the weld metal 203 projecting from the rear surface 222 of the second steel sheet 202 was assumed to be a second region, a region other than the first region and the second region was assumed to be a third region, and the area of each region was calculated; furthermore, X expressed by formula (6) below was calculated from the results, and is indicated in Table 3.

$$X = (\text{area of first region} + \text{area of second region})/(\text{area of first region} + \text{area of}$$

$$\text{second region} + \text{area of third region}) \quad (6)$$

The Vickers hardness (WM Hv) of the weld metal and the Vickers hardness (BM Hv) of the steel sheet serving as the base metal are indicated in Table 3. The Vickers hardness (WM Hv) of the weld metal was measured in accordance with JIS Z 2244 as with measuring the Vickers hardness (BM Hv) of the steel sheet. Furthermore, the ratio (WM Hv/BM Hv) of the Vickers hardness of the weld metal (WM Hv) to the Vickers hardness of the steel sheet (BM Hv) was calculated, and is indicated in Table 3.

[Table 2]

Table 2

| No | Welding conditions | | | Steel sheet | | Wire components (mass%) | | | | | | | | | Ceqw | Weld metal composition (mass%) | | | | | | | | Ceqwm | Ceqbm | Ceqwm/ Ceqbm |
|---|---|---|---|---|---|---|---|---|---|---|---|---|---|---|---|---|---|---|---|---|---|---|---|---|---|---|
| | Heat input (kJ) | Gas type | Process | Steel type | Sheet thickness | C | Si | Mn | Cu | Ni | Cr | Mo | Others | Fe | | C | Si | Mn | Cu | Ni | Cr | Mo | Others | | | |
| 1 | 2.5 | 20%CO2 | Pulse | B | 1.6 | 0.01 | 0.02 | 0.52 | 0.03 | 0.03 | 0.02 | 0.01 | 0 | 99.36 | 0.11 | 0.18 | 0.78 | 1.12 | 0.04 | 0.02 | 0.03 | 0.01 | - | 0.37 | 0.75 | 0.50 |
| 2 | 2.3 | 20%CO2 | Pulse | B | 1.6 | 0.03 | 0.60 | 0.67 | 0.03 | 0.03 | 0.02 | 0.01 | 0 | 98.61 | 0.15 | 0.13 | 0.72 | 1.54 | 0.04 | 0.05 | 0.04 | 0.04 | - | 0.41 | 0.75 | 0.54 |
| 3 | 4.2 | 20%CO2 | Pulse | B | 1.6 | 0.03 | 0.02 | 1.20 | 0.03 | 0.03 | 0.02 | 0.01 | 0 | 98.66 | 0.24 | 0.17 | 0.81 | 1.68 | 0.03 | 0.04 | 0.04 | 0.03 | - | 0.47 | 0.75 | 0.63 |
| 4 | 4.7 | 20%CO2 | Pulse | B | 1.6 | 0.12 | 0.02 | 0.98 | 0.03 | 0.03 | 0.02 | 0.01 | 0 | 98.79 | 0.29 | 0.16 | 0.73 | 0.86 | 0.04 | 0.03 | 0.04 | 0.03 | - | 0.33 | 0.75 | 0.44 |
| 5 | 3.7 | 20%CO2 | Pulse | B | 1.6 | 0.02 | 0.02 | 0.02 | 0.02 | 0.02 | 0.02 | 0.02 | 0 | 99.86 | 0.03 | 0.20 | 0.60 | 1.63 | 0.04 | 0.03 | 0.04 | 0.03 | - | 0.49 | 0.75 | 0.66 |
| 6 | 2.8 | 20%CO2 | Pulse | B | 1.6 | 0.15 | 0.03 | 0.43 | 0.20 | 0.20 | 0.40 | 0.10 | 0 | 98.49 | 0.35 | 0.25 | 0.89 | 1.77 | 0.04 | 0.04 | 0.04 | 0.03 | - | 0.56 | 0.75 | 0.76 |
| 7 | 2.9 | 20%CO3 | Pulse | B | 1.6 | 0.07 | 0.34 | 0.67 | 0.00 | 0.00 | 0.00 | 0.00 | 0 | 98.92 | 0.18 | 0.19 | 0.91 | 1.68 | 0.03 | 0.03 | 0.04 | 0.04 | - | 0.49 | 0.75 | 0.65 |
| 8 | 2.8 | 20%CO2 | Pulse | B | 2.6 | 0.10 | 0.03 | 0.43 | 0.20 | 0.20 | 0.40 | 0.10 | Ti:0.12 | 98.54 | 0.30 | 0.18 | 0.92 | 1.63 | 0.05 | 0.04 | 0.04 | 0.04 | - | 0.47 | 0.75 | 0.63 |
| 9 | 2.3 | 20%CO2 | Pulse | B | 3.6 | 0.10 | 0.03 | 0.43 | 0.20 | 0.20 | 0.40 | 0.10 | B:0.005 | 98.54 | 0.30 | 0.13 | 0.61 | 1.70 | 0.04 | 0.05 | 0.05 | 0.03 | - | 0.44 | 0.75 | 0.59 |
| 10 | 4.8 | 20%CO2 | Pulse | B | 4.6 | 0.03 | 0.45 | 1.20 | 0.03 | 0.03 | 0.02 | 0.01 | 0 | 98.23 | 0.24 | 0.18 | 0.78 | 1.19 | 0.04 | 0.03 | 0.04 | 0.03 | - | 0.40 | 0.75 | 0.53 |
| 11 | 3.0 | 20%CO2 | Pulse | B | 5.6 | 0.11 | 0.03 | 0.43 | 0.20 | 0.20 | 0.40 | 0.10 | 0 | 98.53 | 0.31 | 0.17 | 0.90 | 1.39 | 0.05 | 0.04 | 0.05 | 0.03 | - | 0.43 | 0.75 | 0.57 |
| 12 | 5.5 | 20%CO2 | Pulse | B | 1.6 | 0.01 | 0.02 | 0.52 | 0.03 | 0.03 | 0.02 | 0.01 | 0 | 99.36 | 0.11 | 0.18 | 0.70 | 0.83 | 0.04 | 0.04 | 0.03 | 0.05 | - | 0.34 | 0.75 | 0.46 |
| 13 | 6.2 | 20%CO2 | Pulse | B | 1.6 | 0.01 | 0.02 | 0.52 | 0.03 | 0.03 | 0.02 | 0.01 | 0 | 99.36 | 0.11 | 0.11 | 0.66 | 1.70 | 0.05 | 0.03 | 0.05 | 0.05 | - | 0.42 | 0.75 | 0.56 |
| 14 | 0.5 | 20%CO2 | Pulse | B | 1.6 | 0.01 | 0.02 | 0.52 | 0.03 | 0.03 | 0.02 | 0.01 | 0 | 99.36 | 0.11 | 0.09 | 0.74 | 1.19 | 0.03 | 0.03 | 0.03 | 0.04 | - | 0.31 | 0.75 | 0.41 |
| 15 | 4.4 | 100%CO2 | Pulse | B | 1.6 | 0.01 | 0.02 | 0.52 | 0.03 | 0.03 | 0.02 | 0.01 | 0 | 99.36 | 0.11 | 0.19 | 0.81 | 0.81 | 0.04 | 0.03 | 0.04 | 0.03 | - | 0.35 | 0.75 | 0.46 |
| 16 | 2.1 | 30%CO2 | Pulse | B | 1.6 | 0.01 | 0.02 | 0.52 | 0.03 | 0.03 | 0.02 | 0.01 | 0 | 99.36 | 0.11 | 0.12 | 0.50 | 1.19 | 0.03 | 0.03 | 0.04 | 0.03 | - | 0.34 | 0.75 | 0.46 |
| 17 | 3.0 | 10%CO2 | Pulse | B | 1.6 | 0.01 | 0.02 | 0.52 | 0.03 | 0.03 | 0.02 | 0.01 | 0 | 99.36 | 0.11 | 0.16 | 0.83 | 1.15 | 0.05 | 0.04 | 0.03 | 0.05 | - | 0.37 | 0.75 | 0.50 |
| 18 | 4.7 | 1%CO2 | Pulse | B | 1.6 | 0.01 | 0.02 | 0.52 | 0.03 | 0.03 | 0.02 | 0.01 | 0 | 99.36 | 0.11 | 0.16 | 0.83 | 1.09 | 0.04 | 0.05 | 0.04 | 0.03 | - | 0.36 | 0.75 | 0.48 |
| 19 | 4.7 | 8%CO2+2%O2 | Pulse | B | 1.6 | 0.01 | 0.02 | 0.52 | 0.03 | 0.03 | 0.02 | 0.01 | 0 | 99.36 | 0.11 | 0.16 | 0.96 | 1.29 | 0.04 | 0.03 | 0.04 | 0.04 | - | 0.40 | 0.75 | 0.53 |
| 20 | 3.9 | 20%CO2 | Short-circuiting | B | 1.6 | 0.01 | 0.02 | 0.52 | 0.03 | 0.03 | 0.02 | 0.01 | 0 | 99.36 | 0.11 | 0.16 | 0.75 | 1.04 | 0.04 | 0.03 | 0.04 | 0.05 | - | 0.36 | 0.75 | 0.49 |
| 21 | 3.7 | 20%CO2 | Pulse | B | 1.6 | 0.01 | 0.02 | 0.52 | 0.03 | 0.03 | 0.02 | 0.01 | 0 | 99.36 | 0.11 | 0.20 | 0.89 | 1.74 | 0.03 | 0.04 | 0.05 | 0.04 | - | 0.51 | 0.75 | 0.68 |
| 22 | 1.3 | 20%CO2 | TIG | B | 1.6 | 0.01 | 0.02 | 0.52 | 0.03 | 0.03 | 0.02 | 0.01 | 0 | 99.36 | 0.11 | 0.11 | 0.74 | 1.73 | 0.04 | 0.03 | 0.04 | 0.05 | - | 0.42 | 1.75 | 0.24 |
| 23 | 4.8 | 20%CO2 | Wire feed control | B | 1.6 | 0.01 | 0.02 | 0.52 | 0.03 | 0.03 | 0.02 | 0.01 | 0 | 99.36 | 0.11 | 0.11 | 0.67 | 0.85 | 0.04 | 0.04 | 0.05 | 0.04 | - | 0.27 | 0.75 | 0.37 |
| 24 | 1.0 | 20%CO2 | Pulse | A | 1.6 | 0.01 | 0.02 | 0.52 | 0.03 | 0.03 | 0.02 | 0.01 | 0 | 99.36 | 0.11 | 0.29 | 0.88 | 1.12 | 0.03 | 0.03 | 0.05 | 0.03 | - | 0.50 | 0.51 | 0.97 |
| 25 | 3.8 | 20%CO2 | Pulse | B | 1.6 | 0.01 | 0.02 | 0.52 | 0.03 | 0.03 | 0.02 | 0.01 | 0 | 99.36 | 0.11 | 0.26 | 0.73 | 1.65 | 0.04 | 0.05 | 0.04 | 0.05 | - | 0.56 | 0.75 | 0.75 |
| 26 | 4.2 | 20%CO2 | Pulse | C | 1.6 | 0.01 | 0.02 | 0.52 | 0.03 | 0.03 | 0.02 | 0.01 | 0 | 99.36 | 0.11 | 0.17 | 0.18 | 0.37 | 0.05 | 0.05 | 0.03 | 0.04 | - | 0.26 | 0.79 | 0.32 |
| 27 | 1.5 | 20%CO2 | Pulse | D | 1.6 | 0.01 | 0.02 | 0.52 | 0.03 | 0.03 | 0.02 | 0.01 | 0 | 99.36 | 0.11 | 0.15 | 0.83 | 1.05 | 0.04 | 0.05 | 0.04 | 0.03 | - | 0.35 | 1.00 | 0.35 |
| 28 | 2.4 | 20%CO2 | Pulse | F | 1.6 | 0.01 | 0.02 | 0.52 | 0.03 | 0.03 | 0.02 | 0.01 | 0 | 99.36 | 0.11 | 0.73 | 0.16 | 0.35 | 0.04 | 0.04 | 0.03 | 0.04 | - | 0.81 | 1.19 | 0.68 |
| 29 | 1.5 | 20%CO3 | Pulse | F | 1.6 | 0.01 | 0.02 | 0.52 | 0.03 | 0.03 | 0.02 | 0.01 | 0 | 99.36 | 0.11 | 0.83 | 0.16 | 0.38 | 0.03 | 0.04 | 0.05 | 0.04 | - | 0.92 | 1.19 | 0.77 |
| 30 | 3.1 | 20%CO2 | Pulse | B | 0.8 | 0.01 | 0.02 | 0.52 | 0.03 | 0.03 | 0.02 | 0.01 | 0 | 99.36 | 0.11 | 0.15 | 0.97 | 0.97 | 0.04 | 0.03 | 0.04 | 0.04 | - | 0.33 | 0.75 | 0.44 |
| 31 | 2.5 | 20%CO2 | Pulse | B | 3.2 | 0.01 | 0.02 | 0.52 | 0.03 | 0.03 | 0.02 | 0.01 | 0 | 99.36 | 0.11 | 0.12 | 0.51 | 1.46 | 0.03 | 0.04 | 0.05 | 0.05 | - | 0.38 | 0.75 | 0.51 |
| 32 | 4.7 | 20%CO2 | Pulse | C | 1.6 | 0.01 | 0.02 | 0.52 | 0.03 | 0.03 | 0.02 | 0.01 | 0 | 99.36 | 0.11 | 0.16 | 0.11 | 0.36 | 0.04 | 0.03 | 0.04 | 0.04 | - | 0.24 | 0.79 | 0.30 |
| 33 | 4.1 | 20%CO2 | Pulse | B | 1.6 | 0.01 | 0.02 | 0.52 | 0.03 | 0.03 | 0.02 | 0.01 | 0 | 99.36 | 0.11 | 0.08 | 0.98 | 1.69 | 0.05 | 0.04 | 0.04 | 0.03 | - | 0.39 | 0.75 | 0.52 |
| 34 | 4.2 | 20%CO2 | Pulse | B | 1.6 | 0.01 | 0.02 | 0.52 | 0.03 | 0.03 | 0.02 | 0.01 | 0 | 99.36 | 0.11 | 0.14 | 0.68 | 0.94 | 0.03 | 0.05 | 0.03 | 0.04 | - | 0.32 | 0.75 | 0.43 |
| 35 | 1.5 | 20%CO2 | Pulse | B | 1.6 | 0.01 | 0.02 | 0.52 | 0.03 | 0.03 | 0.02 | 0.01 | 0 | 99.36 | 0.11 | 0.14 | 0.84 | 1.74 | 0.04 | 0.05 | 0.04 | 0.04 | - | 0.45 | 0.75 | 0.60 |
| 36 | 2.2 | 20%CO2 | Pulse | E | 1.6 | 0.01 | 0.02 | 0.52 | 0.03 | 0.03 | 0.02 | 0.01 | 0 | 99.36 | 0.11 | 0.05 | 0.18 | 0.43 | 0.04 | 0.05 | 0.04 | 0.04 | - | 0.14 | 0.22 | 0.65 |
| 37 | 4.1 | 20%CO2 | Pulse | A | 1.6 | 0.2 | 0.82 | 1.4 | 0.03 | 0.03 | 0.03 | 1 | 0 | 96.49 | 0.64 | 0.20 | 0.88 | 0.81 | 0.03 | 0.04 | 0.03 | 1.00 | - | 0.55 | 0.49 | 1.12 |
| 38 | 4.9 | 20%CO2 | Pulse | B | 1.6 | 0.02 | 0.02 | 0.02 | 0 | 70 | 2 | 19 | 0 | 8.94 | 8.89 | 0.16 | 0.73 | 1.72 | 0.05 | 0.03 | 0.03 | 0.03 | - | 0.46 | 0.75 | 0.62 |
| 39 | 2.0 | 20%CO2 | Laser filler | B | 1.6 | 0.01 | 0.02 | 0.52 | 0.03 | 0.03 | 0.02 | 0.01 | 0 | 99.36 | 0.11 | 0.17 | 0.76 | 0.97 | 0.04 | 0.04 | 0.05 | 0.04 | - | 0.35 | 0.75 | 0.47 |

[Table 3]

[Table 3]

Table 3

| No | Area (mm²) | | | X | r1 | r2 | r3 | r2/r1 | r2/r3 | W Hv | B Hv | W Hv/B Hv | CTS |
|---|---|---|---|---|---|---|---|---|---|---|---|---|---|
| | First region | Second region | Third region | | | | | | | | | | |
| 1 | 16.5 | 1.8 | 23.8 | 0.43 | 11.5 | 4.9 | 3.1 | 0.43 | 1.60 | 245 | 300 | 0.82 | ⊙ |
| 2 | 17.2 | 2.3 | 22.3 | 0.47 | 10.5 | 4.3 | 3.8 | 0.41 | 1.13 | 220 | 300 | 0.73 | ⊙ |
| 3 | 16.3 | 1.3 | 10.8 | 0.62 | 11.1 | 5.4 | 3.2 | 0.48 | 1.67 | 251 | 300 | 0.84 | ⊙ |
| 4 | 21.9 | 4.3 | 16.8 | 0.61 | 11.7 | 5.2 | 3.3 | 0.44 | 1.59 | 283 | 300 | 0.94 | ⊙ |
| 5 | 15.3 | 4.3 | 29.4 | 0.40 | 11.0 | 4.4 | 1.4 | 0.40 | 3.16 | 203 | 300 | 0.68 | ⊙ |
| 6 | 18.0 | 3.3 | 28.0 | 0.43 | 11.3 | 5.8 | 4.1 | 0.51 | 1.40 | 310 | 300 | 1.03 | ○ |
| 7 | 18.4 | 1.2 | 25.1 | 0.44 | 11.3 | 3.0 | 3.2 | 0.26 | 0.94 | 288 | 300 | 0.96 | ⊙ |
| 8 | 14.5 | 4.4 | 22.7 | 0.46 | 11.0 | 3.2 | 4.8 | 0.29 | 0.67 | 213 | 300 | 0.71 | ○ |
| 9 | 17.8 | 5.0 | 43.8 | 0.34 | 11.3 | 5.8 | 0.6 | 0.51 | 9.67 | 295 | 300 | 0.98 | ⊙ |
| 10 | 17.9 | 4.2 | 44.6 | 0.33 | 11.3 | 5.6 | 3.4 | 0.50 | 1.66 | 274 | 300 | 0.91 | ○ |
| 11 | 17.4 | 1.7 | 30.3 | 0.39 | 11.2 | 5.5 | 4.5 | 0.49 | 1.23 | 251 | 300 | 0.84 | ○ |
| 12 | 21.5 | 5.0 | 20.4 | 0.57 | 12.0 | 9.1 | 4.7 | 0.75 | 1.94 | 254 | 300 | 0.85 | ⊙ |
| 13 | 11.4 | 6.4 | 37.4 | 0.32 | 8.0 | 8.1 | 4.9 | 1.01 | 1.66 | 204 | 300 | 0.68 | ○ |
| 14 | 16.7 | 2.8 | 32.0 | 0.38 | 6.0 | 5.1 | 3.9 | 0.85 | 1.30 | 248 | 300 | 0.83 | ⊙ |
| 15 | 13.7 | 1.2 | 55.0 | 0.21 | 12.1 | 5.0 | 3.8 | 0.41 | 1.32 | 191 | 300 | 0.64 | ○ |
| 16 | 14.3 | 1.4 | 54.8 | 0.22 | 11.8 | 4.6 | 4.8 | 0.39 | 0.98 | 215 | 300 | 0.72 | ⊙ |
| 17 | 20.4 | 3.0 | 37.5 | 0.38 | 11.5 | 4.2 | 2.1 | 0.36 | 2.00 | 208 | 300 | 0.69 | ⊙ |
| 18 | 27.8 | 3.2 | 8.1 | 0.79 | 13.9 | 3.4 | 1.1 | 0.24 | 3.09 | 222 | 300 | 0.74 | ⊙ |
| 19 | 18.7 | 3.8 | 17.9 | 0.56 | 11.4 | 6.6 | 3.3 | 0.58 | 1.97 | 219 | 300 | 0.73 | ⊙ |
| 20 | 14.5 | 2.6 | 33.7 | 0.34 | 10.1 | 5.5 | 0.4 | 0.54 | 13.67 | 243 | 300 | 0.81 | ○ |
| 21 | 26.4 | 3.2 | 5.3 | 0.85 | 11.5 | 6.5 | 4.2 | 0.56 | 1.55 | 303 | 300 | 1.01 | ○ |
| 22 | 32.0 | 3.5 | 27.0 | 0.57 | 11.5 | 4.2 | 0.3 | 0.37 | 14.00 | 308 | 300 | 1.03 | ○ |
| 23 | 10.0 | 1.1 | 46.0 | 0.19 | 15.0 | 5.1 | 0.8 | 0.34 | 6.43 | 112 | 300 | 0.37 | ○ |

| No | Area (mm²) | | | X | r1 | r2 | r3 | r2/r1 | r2/r3 | W Hv | B Hv | W Hv/B Hv | CTS |
|---|---|---|---|---|---|---|---|---|---|---|---|---|---|
| | First region | Second region | Third region | | | | | | | | | | |
| 24 | 13.8 | 1.1 | 21.4 | 0.41 | 10.9 | 2.0 | 3.6 | 0.18 | 0.55 | 159 | 200 | 0.80 | ⊙ |
| 25 | 12.7 | 4.4 | 35.9 | 0.32 | 10.8 | 3.0 | 1.0 | 0.28 | 3.01 | 369 | 300 | 1.23 | ○ |
| 26 | 22.9 | 3.5 | 17.6 | 0.60 | 11.8 | 3.0 | 3.5 | 0.26 | 0.87 | 343 | 400 | 0.86 | ○ |
| 27 | 13.2 | 3.9 | 18.8 | 0.48 | 10.8 | 4.5 | 3.8 | 0.42 | 1.19 | 142 | 450 | 0.31 | ⊙ |
| 28 | 22.1 | 2.4 | 7.7 | 0.76 | 11.7 | 5.0 | 4.4 | 0.43 | 1.14 | 123 | 480 | 0.26 | ○ |
| 29 | 15.8 | 3.9 | 35.3 | 0.36 | 11.1 | 4.3 | 3.1 | 0.39 | 1.38 | 304 | 480 | 0.63 | ○ |
| 30 | 24.9 | 4.4 | 40.4 | 0.42 | 12.0 | 3.6 | 4.0 | 0.30 | 0.90 | 349 | 300 | 1.16 | ⊙ |
| 31 | 16.3 | 2.9 | 24.0 | 0.44 | 11.1 | 4.9 | 3.5 | 0.44 | 1.39 | 201 | 300 | 0.67 | ○ |
| 32 | 17.3 | 1.1 | 49.3 | 0.27 | 11.2 | 4.5 | 3.6 | 0.40 | 1.25 | 227 | 400 | 0.57 | ⊙ |
| 33 | 20.5 | 2.3 | 45.0 | 0.34 | 11.5 | 2.0 | 4.5 | 0.17 | 0.44 | 135 | 300 | 0.45 | ○ |
| 34 | 17.9 | 2.5 | 5.1 | 0.80 | 11.3 | 5.1 | 0.6 | 0.45 | 8.55 | 232 | 300 | 0.77 | ○ |
| 35 | 13.4 | 3.3 | 30.3 | 0.36 | 10.8 | 9.2 | 9.9 | 0.85 | 0.93 | 181 | 300 | 0.60 | ○ |
| 36 | 29.0 | 0.3 | 0.5 | 0.98 | 12.4 | 5.6 | 4.3 | 0.4 | 1.3 | 277 | 200 | 1.39 | × |
| 37 | 23.8 | 0.8 | 11.8 | 0.68 | 11.9 | 5.4 | 4.8 | 0.5 | 1.1 | 299 | 200 | 1.50 | × |
| 38 | 22.9 | 3.1 | 6.1 | 0.81 | 11.8 | 5.5 | 4.5 | 0.5 | 1.2 | 165 | 300 | 0.55 | × |
| 39 | 12.0 | 4.1 | 36.8 | 0.30 | 10.7 | 5.2 | 4.6 | 0.5 | 1.1 | 292 | 300 | 0.97 | × |

Samples 1 to 35 are Examples, and samples 36 to 39 are Comparative Examples.

In sample 36, in which the carbon equivalent $Ceq_{BM}$ of the steel sheet was outside the range specified in the present invention, sufficient strength was not obtained in the cross tension testing.

Also in sample 37, in which the Fe content in the welding wire was outside the range specified in the present invention, sufficient strength was not obtained in the cross tension testing.

Also in sample 38, in which the Fe content in the welding wire was outside the range specified in the present invention and $Ceq_{WM}/Ceq_{BM}$ was outside the range specified in the present invention, sufficient strength was not obtained in the cross tension testing.

Also in sample 39, in which an arc spot welding method was not employed, sufficient strength was not obtained in the cross tension testing.

Meanwhile, samples 1 to 35 that satisfied the requirements specified in the present invention obtained sufficient strength in the cross tension testing.

It is clear to a person skilled in the art that although the present invention has been described in detail by referring to the embodiments, various modifications and alterations are possible without departing from the spirit and the scope of the present invention.

The present application is based on Japanese Patent Application filed on August 4, 2016 (Japanese Patent Application No. 2016-154053), the entire contents of which are incorporated herein by reference.

Reference Signs List

1: first steel sheet
2: second steel sheet
3: weld metal
4: HAZ (heat affected zone)
11: front surface
12: rear surface
21: front surface
22: rear surface
51: first region
52: second region
53: third region
100: welded structure
201: first steel sheet
202: second steel sheet
203: weld metal
204: hole
211: front surface
212: rear surface
221: front surface
222: rear surface

**Claims**

1. An arc spot welding method that uses a steel sheet having a carbon equivalent $Ceq_{BM}$, which is expressed by formula (1) below, of 0.35 or more, the arc spot welding method comprising using a welding wire containing 98.5 mass% or more of Fe, wherein $Ceq_{WM}/Ceq_{BM}$, which is a ratio of a carbon equivalent $Ceq_{WM}$, which is expressed by formula (2) below, of a weld metal formed to the carbon equivalent $Ceq_{BM}$ of the steel sheet, is 0.2 to 1.0:

$$Ceq_{BM} = [C]_{BM} + [Mn]_{BM}/6 + ([Cu]_{BM} + [Ni]_{BM})/15 + ([Cr]_{BM} + [Mo]_{BM} + [V]_{BM})/5 \quad (1)$$

(where $[C]_{BM}$, $[Mn]_{BM}$, $[Cu]_{BM}$, $[Ni]_{BM}$, $[Cr]_{BM}$, $[Mo]_{BM}$, and $[V]_{BM}$ respectively represent C, Mn, Cu, Ni, Cr, Mo, and V contents (mass%) in the steel sheet)

$$Ceq_{WM} = [C]_{WM} + [Mn]_{WM}/6 + ([Cu]_{WM} + [Ni]_{WM})/15 + ([Cr]_{WM} + [Mo]_{WM} + [V]_{WM})/5$$

$$(2)$$

(where $[C]_{WM}$, $[Mn]_{WM}$, $[Cu]_{WM}$, $[Ni]_{WM}$, $[Cr]_{WM}$, $[Mo]_{WM}$, and $[V]_{WM}$ respectively represent C, Mn, Cu, Ni, Cr, Mo, and V contents (mass%) in the weld metal).

2. The arc spot welding method according to Claim 1, wherein a carbon equivalent Ceqw, which is expressed by formula (3) below, of the welding wire is 0.3 or less:

$$\mathrm{Ceqw} = [C]_W + [Mn]_W/6 + ([Cu]_W + [Ni]_W)/15 + ([Cr]_W + [Mo]_W)/5 \quad (3)$$

(where $[C]_W$, $[Mn]_W$, $[Cu]_W$, $[Ni]_W$, $[Cr]_W$, and $[Mo]_W$ respectively represent C, Mn, Cu, Ni, Cr, and Mo contents (mass%) in the welding wire).

3. The arc spot welding method according to Claim 1, wherein a heat input is 5.5 kJ or less.

4. The arc spot welding method according to Claim 1, wherein:

   when arc spot welding is performed on a first steel sheet on an arc exposed side and a second steel sheet that are superimposed on top of each other with a rear surface of the first steel sheet facing a front surface of the second steel sheet, and when a bead diameter of the weld metal on a front surface of the first steel sheet is assumed to be r1 and a bead diameter of the weld metal on the front surface of the second steel sheet is assumed to be r2, r1 and r2 satisfy formula (4) below, and
   when, in a section of the weld metal taken in a direction parallel to a thickness of the steel sheets so as to pass a center of the weld metal, a region corresponding to the weld metal projecting from the front surface of the first steel sheet is assumed to be a first region, a region corresponding to the weld metal projecting from a rear surface of the second steel sheet is assumed to be a second region, and a region other than the first region and the second region is assumed to be a third region, X expressed by formula (6) below is 0.2 to 0.8:

$$0.2 \le (r2/r1) \le 1.0 \quad (4)$$

$$\mathrm{X} = \text{(area of first region + area of second region)/(area of first region + area of second region + area of third region)} \quad (6)$$

5. The arc spot welding method according to any one of Claims 1 to 4, wherein a ratio of a Vickers hardness of the weld metal to a Vickers hardness of the steel sheet (Vickers hardness of weld metal/Vickers hardness of steel sheet) is 0.3 to 1.2.

# FIG. 1

100

# FIG. 2

100

# FIG. 3

# FIG. 4

## INTERNATIONAL SEARCH REPORT

| International application No. |
| --- |
| PCT/JP2017/028023 |

**A. CLASSIFICATION OF SUBJECT MATTER**
*C22C38/00*(2006.01)i, *B23K9/007*(2006.01)i, *B23K9/23*(2006.01)i, *B23K35/30*
(2006.01)i, *C22C38/58*(2006.01)n

According to International Patent Classification (IPC) or to both national classification and IPC

**B. FIELDS SEARCHED**

Minimum documentation searched (classification system followed by classification symbols)
C22C38/00, B23K9/007, B23K9/23, B23K35/30, C22C38/58

Documentation searched other than minimum documentation to the extent that such documents are included in the fields searched
Jitsuyo Shinan Koho        1922–1996   Jitsuyo Shinan Toroku Koho   1996–2017
Kokai Jitsuyo Shinan Koho   1971–2017   Toroku Jitsuyo Shinan Koho   1994–2017

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | WO 2015/016287 A1 (Nippon Steel & Sumitomo Metal Corp.), 05 February 2015 (05.02.2015), & US 2016/0158865 A1   & EP 3028799 A1 & CN 105358282 A       & KR 10-2016-0023902 A | 1-5 |
| A | JP 2013-10139 A (Nippon Steel & Sumitomo Metal Corp.), 17 January 2013 (17.01.2013), (Family: none) | 1-5 |
| A | JP 2006-68796 A (Nippon Steel Corp.), 16 March 2006 (16.03.2006), (Family: none) | 1-5 |

|☒| Further documents are listed in the continuation of Box C. | ☐ | See patent family annex. |

\* Special categories of cited documents:
"A" document defining the general state of the art which is not considered  to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
| --- | --- |
| 18 October 2017 (18.10.17) | 31 October 2017 (31.10.17) |

| Name and mailing address of the ISA/ | Authorized officer |
| --- | --- |
| Japan Patent Office 3-4-3,Kasumigaseki,Chiyoda-ku, Tokyo 100-8915,Japan | |
| | Telephone No. |

Form PCT/ISA/210 (second sheet) (January 2015)

## INTERNATIONAL SEARCH REPORT

International application No.

PCT/JP2017/028023

C (Continuation).    DOCUMENTS CONSIDERED TO BE RELEVANT

| Category* | Citation of document, with indication, where appropriate, of the relevant passages | Relevant to claim No. |
|---|---|---|
| A | JP 7-241668 A  (Nippon Steel Corp.), 19 September 1995 (19.09.1995), (Family: none) | 1-5 |

Form PCT/ISA/210 (continuation of second sheet) (January 2015)

**EP 3 495 524 A1**

## REFERENCES CITED IN THE DESCRIPTION

### Patent documents cited in the description

- JP 2013010139 A
- JP 2016154053 A